# FASCICULE DE BREVET EUROPEEN

(11) **EP 2 729 633 B1**
(45) Date de publication et mention de la délivrance du brevet: **14.09.2016**
(21) Numéro de dépôt: 12738578.9
(22) Date de dépôt: 06.07.2012
(51) Int. Cl.: E04B 1/74, E04B 2/02, E04B 1/62

(54) **PAROI**
MAUER
WALL

(30) Priorité: 07.07.2011 FR 1156178; 09.05.2012 FR 1254224
(43) Date de publication de la demande: 14.05.2014
(73) Titulaire: Saint-Gobain Isover, 92400 Courbevoie (FR)
(72) Inventeur: BARNASSON, Eric, F-94700 Maisons-Alfort (FR); LIZARAZU, Dominica, F-75017 Paris (FR); LEGUAY, Jean-Claude, F-84850 Camaret sur Aygues (FR)
(74) Mandataire: Pöpping, Barbara
(86) Numéro de dépôt international: PCT/FR2012/051598
(87) Numéro de publication internationale: WO 2013/004980

(56) Documents cités:
- EP-A2- 1 213 406
- WO-A1-2004/051019
- WO-A1-2006/063549
- WO-A1-2011/055084
- DE-U1- 20 320 472
- US-A- 3 438 163

## Description

L'invention se rapporte au domaine des bâtiments dont les murs porteurs sont maçonnés. Elle concerne plus particulièrement des solutions d'amélioration de l'isolation thermique de tels bâtiments.

Les bâtiments à murs porteurs maçonnés comprennent typiquement des parois en maçonnerie (briques, parpaings, moellons, pierres, blocs béton...), généralement revêtues à l'extérieur du bâtiment d'un enduit de façade, et à l'intérieur d'un parement, par exemple en plaques de plâtre ou en lambris. Afin d'améliorer les propriétés d'isolation thermiques des bâtiments, il est possible de disposer un isolant thermique du côté intérieur du mur, entre le mur et le parement. Les bâtiments ainsi conçus présentent une isolation thermique très satisfaisante.

Il existe néanmoins un besoin constant de limiter encore les déperditions de chaleur par les murs, afin de réduire la consommation énergétique et les émissions de gaz à effet de serre.

Pour répondre à ce besoin, l'invention a pour objet une paroi de bâtiment comprenant, depuis l'extérieur vers l'intérieur dudit bâtiment, un mur porteur maçonné, une membrane d'étanchéité à l'air dont l'épaisseur d'air équivalente S_{d} au sens de la norme NF EN ISO 12572 :2001 sous conditions C est d'au plus 0,5 m, puis un isolant thermique et un parement, ladite membrane étant solidarisée audit mur porteur maçonné à l'aide d'éléments de fixation et de maintien dudit isolant thermique.

Le brevet US 3 438 163 divulgue une paroi de chambre froide destinée à être utilisée entre un milieu extérieur humide et relativement chaud et un milieu intérieur froid et sec. Cette paroi comprend, depuis l'extérieur vers l'intérieur, un mur maçonné, une membrane d'étanchéité à l'air imperméable à la vapeur d'eau, un isolant thermique et un parement intérieur.

Le principe de fonctionnement de la paroi de chambre froide suppose une excellente imperméabilité à la vapeur d'eau de la membrane d'étanchéité à l'air qui a pour fonction d'empêcher l'humidité de l'air chaud, qui se trouve à l'extérieur de la chambre froide, de pénétrer dans l'isolant thermique et d'en réduire les performances isolantes. Il s'agit donc de réduire le plus possible, voire d'empêcher totalement, la pénétration de la vapeur d'eau de l'extérieur de la paroi vers l'intérieur du matériau isolant et de favoriser l'évacuation de vapeur d'eau depuis le matériau isolant thermique vers l'intérieur de la chambre froide.

La demande internationale WO2006/063549 divulgue des membranes en polyamide présentant une perméabilité à la vapeur d'eau qui varie en fonction du taux d'humidité de leur environnement. L'épaisseur d'air équivalente S_{d} de ces membranes, pour un taux d'humidité relatif compris entre 60 et 80 %, est inférieure à 0,5 m.

L'utilisation d'une membrane d'étanchéité à l'air permet de réduire les fuites d'air à travers les murs, en améliorant de façon très sensible la performance énergétique du bâtiment, en neuf comme en rénovation.

L'épaisseur d'air équivalente S_{d} correspond à l'épaisseur d'air possédant la même perméance à la vapeur d'eau que le matériau considéré. La valeur s_{d} de la membrane utilisée dans la présente invention est de préférence comprise entre 0,02 et 0,4 m, en particulier entre 0,1 et 0,35 m, et de manière particulièrement préférée entre 0,18 et 0,30 m. Une valeur aussi faible, et donc une perméabilité à la vapeur d'eau aussi élevée, permet d'éviter toute condensation d'eau dans l'isolant, laquelle peut endommager l'isolant et favoriser le développement de moisissures qui vont à terme être préjudiciables à la fois à la santé des occupants et à la pérennité du bâtiment. A l'inverse, l'utilisation de membranes faiblement perméables à la vapeur d'eau, telles que des pare-vapeur, aurait pour conséquence un piégeage de la vapeur d'eau au sein de l'isolant, et un risque de condensation si la température locale est inférieure au point de rosée. De préférence, la paroi selon l'invention ne comprend pas de pare-vapeur ou de frein-vapeur entre l'isolant et le parement.

Le mur porteur maçonné comprend de préférence des éléments de maçonnerie solidarisés les uns aux autres par un mortier ou une colle, tels que parpaings, briques, moellons, blocs de béton de granulats. Le mur porteur maçonné peut être recouvert sur sa face intérieure d'un enduit. Au sens de la présente invention, un tel enduit doit être considéré comme faisant partie du mur porteur. Sur sa face extérieure, le mur porteur maçonné sera généralement recouvert d'un enduit de façade, assurant des fonctions d'imperméabilisation et d'uniformisation du mur ainsi que de finition esthétique de la façade.

L'isolant thermique est de préférence choisi parmi :
- les isolants à base végétale, tels que le liège comprimé, expansé, ou aggloméré ou les panneaux de particules ou de fibres de bois,
- les isolants minéraux, notamment à base de laine minérale, de verre cellulaire, d'argile expansée, de granulés expansés ou de paillettes exfoliées, notamment en mica ou vermiculite,
- les isolants en mousses plastiques alvéolaires, tels que polystyrènes expansés, moulés, thermo-comprimés ou extrudés, mousses rigides de PVC ou de polyuréthane.

De préférence, l'isolant est un panneau de laine minérale, typiquement en laine de verre, de roche ou de laitier. L'épaisseur du panneau est typiquement comprise entre 40 et 200 mm, typiquement entre 70 et 170 mm. Sa conductivité thermique est de préférence d'au plus 0,04 W/(m.K) ou 0,036 W/(m.K), notamment 0,032 W/(m.K), voire même 0,030 W/(m.K).

La membrane d'étanchéité à l'air est de préférence en contact direct avec le mur porteur maçonné (éventuellement revêtu d'un enduit intérieur comme déjà mentionné). Avec sa face opposée à celle qui est en contact avec la maçonnerie, la membrane d'étanchéité à l'air est avantageusement en contact direct avec l'isolant thermique.

La membrane d'étanchéité à l'air présente au moins l'une, et de préférence chacune, des propriétés suivantes :
- la perméabilité à l'air sous une pression de 50 Pa selon la norme NF EN 12114 est inférieure à 0,1 m³/(h.m²), de préférence 0,01 m³/(h.m²), voire 0,001 m³/(h.m²),
- une résistance à la déchirure au clou dans le sens longitudinal et transverse d'au moins 40 N selon la norme NF EN 13859-2,
- une résistance à la traction dans le sens longitudinal et transverse d'au moins 100 N selon la norme NF EN 13859-2.

La membrane d'étanchéité à l'air est avantageusement transparente, au sens où les motifs du mur maçonné restent visibles.

De manière très avantageuse, la membrane d'étanchéité à l'air est apte à adhérer au mur par adhésion électrostatique. Typiquement, un lé de 2,8 m de haut pour 1,5 m de large est apte à tenir sur le mur, sans aucune fixation mécanique ou chimique, par seule adhésion électrostatique. La pose de la membrane s'en trouve grandement facilitée : il suffit de dérouler un lé de membrane contre le mur, de repositionner la membrane si besoin, de faire épouser à la membrane la forme des points singuliers (tels que les angles, les contours de baie), avant toute opération de fixation mécanique ou à l'aide d'un mastic.

La membrane d'étanchéité à l'air comprend de préférence un film en polyamide, notamment en polyamide 6, ou en polyoléfine, notamment en polyéthylène (particulièrement haute densité) ou polypropylène. Le film est par exemple un non-tissé obtenu par filage direct (spun-bonded). Il sera généralement microporeux et/ou microperforé de façon à ce que la vapeur d'eau puisse aisément le traverser. Le film peut être associé à au moins un support destiné à améliorer sa résistance mécanique, par exemple un non-tissé en polyoléfine, telle que le polypropylène. Le support seul est avantageusement perméable à l'air. La fixation du film imperméable à l'air sur le support perméable à l'air se fait avantageusement par contre-collage à l'aide d'un adhésif. La Demanderesse a en effet constaté que le thermo-calandrage, utilisé couramment pour la jonction d'un film et d'un textile, était inapproprié pour l'obtention de la membrane utilisée dans la présente invention car il enlevait le caractère duveteux du support, ce qui réduisait, voire supprimait la capacité de la membrane à adhérer à la maçonnerie par effet électrostatique. Les non-tissés en polypropylène se sont avérés être particulièrement intéressants pour conférer des propriétés intéressantes en termes d'adhésion électrostatique.

La masse surfacique de la membrane est avantageusement comprise entre 30 et 80 g/m², de préférence entre 35 et 70 g/m², et en particulier entre 40 et 60 g/m². De telles masses surfaciques permettent à la membrane d'adhérer suffisamment longtemps sur le mur par simple adhésion électrostatique, le temps de traiter les points singuliers et de procéder à la fixation définitive.La Demanderesse a en effet constaté que des masses surfaciques au-delà de 80 g/m², affaiblissaient considérablement, voire supprimaient, la capacité de la membrane à adhérer au mur par effet électrostatique.

La membrane peut être traitée de façon à lui conférer une fonction biocide et/ou de réflexion de la chaleur.

Comme la solidarisation au mur se fait de manière mécanique, la membrane n'est de préférence revêtue d'aucun adhésif, qui pourrait être préjudiciable à la perméabilité à la vapeur d'eau de la membrane.

Les éléments de fixation et de maintien de l'isolant thermique comprennent préférentiellement des éléments d'entretoisement sur lesquels l'isolant thermique est embroché ou entre lesquels l'isolant thermique est comprimé. Dans ce dernier cas, les éléments d'entretoisement peuvent être notamment des montants verticaux, par exemple des profilés métalliques en H ou en U.

Les éléments d'entretoisement peuvent être fixés au mur directement, notamment par vissage ou clouage, normalement au travers de la membrane d'étanchéité à l'air. De la sorte, les éléments d'entretoisement assurent un parfait maintien de la membrane contre la face interne du mur.

Alternativement, les éléments d'entretoisement peuvent être fixés au mur par l'intermédiaire d'une fourrure avec laquelle les éléments d'entretoisement sont solidarisés. Dans ce cas, les éléments de fixation et de maintien de l'isolant thermique comprennent la fourrure et les éléments d'entretoisement. L'isolant thermique peut être soit embroché sur les éléments d'entretoisement, soit comprimés entre lesdits éléments. Typiquement, les éléments d'entretoisement sont clipsés dans la fourrure, qui prend la forme d'un rail s'étendant horizontalement le long du mur. La fourrure est typiquement un profilé en U à fond plat, dont les ailes sont prolongées par deux petits retours à angle droit vers l'intérieur du U. Dans le cas d'un mur vertical standard, d'une hauteur au plus égale à 2,80 m, on peut n'employer qu'une fourrure support des éléments d'entretoisement en position horizontale à une distance du sol comprise entre 1,20 et 1,40 m. Si le mur est d'une hauteur supérieure à 2,80 m, on peut employer plusieurs fourrures supports des éléments d'entretoisement en positions horizontales et espacées d'un mètre. Par exemple pour un mur de 3 m de haut, une fourrure à 1 m de haut et une à 2 m de haut conviennent. La fourrure est avantageusement fixée au mur par des moyens mécaniques, par exemple par vissage ou clouage.

Dans les cas précités, une partie des éléments de fixation et de maintien de l'isolant thermique vient maintenir la membrane d'étanchéité à l'air contre le mur maçonné, que ce soit par l'intermédiaire des éléments d'entretoisement (comme dans le premier cas) ou par l'intermédiaire d'une fourrure support desdits éléments (comme dans le deuxième cas). Dans chaque cas, la membrane d'étanchéité à l'air est transpercée par les moyens à l'aide desquels les éléments de fixation et de maintien de l'isolant thermique sont fixés au mur, par exemple par des vis ou des clous. Cela n'affecte toutefois pas l'étanchéité à l'air globale du bâtiment.

Les éléments d'entretoisement, une fois fixés au mur, peuvent consister en une patte de fixation typiquement métallique comprenant une base maintenue contre le mur par fixation mécanique, telle que clouage ou vissage et une lame typiquement métallique solidarisée avec la base et formant un angle droit avec le mur. L'isolant est embroché sur la lame, et la partie de la lame qui dépasse de l'isolant peut être repliée contre ce dernier de façon à obtenir un maintien parfait de l'isolant. Ce type de montage est parfaitement adapté à des doublages de mur du type « contre-cloison maçonnée ». Dans ce cas le parement est typiquement composé de briques plâtrières ou de carreaux de plâtre.

Alternativement, on peut fixer sur les éléments d'entretoisement des profilés de support du parement. Cette fixation peut notamment se faire par l'intermédiaire d'éléments de maintien, les éléments d'entretoisement et les éléments de maintien étant configurés de telle manière que la fixation des profilés puisse être effectuée à distance réglable du mur, ce afin de compenser d'éventuelles irrégularités du mur. Un exemple préféré d'un tel système fait l'objet du document WO 2006/061538. Les profilés de support du parement sont typiquement des profilés métalliques, en U, posés verticalement.

Les éléments d'entretoisement peuvent être en matériau polymère - ils constituent alors des rupteurs de pont thermique - ou en métal ; le matériau polymère peut être injectable, notamment choisi parmi les polyoléfines (polyéthylène, polypropylène ...), les poly (chlorures de vinyle), les polyamides, les styréniques, seuls ou en mélanges de plusieurs d'entre eux, et éventuellement chargés (par des fibres de verre ou équivalent) en vue de leur renforcement mécanique.

Le parement est de préférence en un matériau choisi parmi le plâtre (plaques de plâtre...), les matériaux cellulosiques (lambris en bois, en panneaux de particules, en panneaux contreplaqués...), les matières plastiques (lambris en PVC...), le verre (feuilles de verre décoratif, tel que verre laqué, miroir ou verre imprimé), le métal, la céramique. Le parement peut être fixé sur les profilés de supports décrits précédemment ou sur les montants verticaux, par exemple par vissage.

L'invention a aussi pour objet un bâtiment comprenant au moins une paroi et un toit. De préférence, l'ensemble des parois séparant le bâtiment de l'extérieur est une paroi selon l'invention.

Le toit est de préférence isolé au moyen d'un isolant recouvert sur sa face interne d'une membrane pare-vapeur étanche à l'air, reliée de manière étanche à la membrane d'étanchéité à l'air. Il est ainsi possible d'assurer une continuité entre la membrane d'étanchéité à l'air du mur et la membrane pare-vapeur du toit, et d'éviter toute fuite d'air à la jonction entre les murs et le toit. Les deux membranes peuvent être reliées au moyen d'un mastic, d'un adhésif, ou encore par soudage.

L'invention a également pour objet un procédé de doublage d'un mur porteur maçonné, comprenant les étapes suivantes :
- on pose sur la surface intérieure dudit mur une membrane d'étanchéité à l'air dont l'épaisseur d'air équivalente S_{d} au sens de la norme NF EN ISO 12572 :2001 est d'au plus 0,1 m, puis, dans un ordre indifférent,
- on fixe ladite membrane en haut et en bas dudit mur, et l'on fixe sur ledit mur des éléments de fixation et de maintien d'un isolant thermique de manière à solidariser ladite membrane avec ledit mur, puis
- on pose ledit isolant thermique puis un parement.

Toutes les caractéristiques préférées décrites précédemment en relation avec la paroi selon l'invention sont bien entendu également applicables au procédé de doublage selon l'invention.

La membrane d'étanchéité est typiquement livrée sous forme de rouleaux. La pose de la membrane se fait alors de préférence en déroulant la membrane contre le mur, du haut vers le bas. Dans le cas déjà évoqué plus haut où la membrane d'étanchéité à l'air est apte à adhérer au mur par adhésion électrostatique, la pose est extrêmement facilitée. De préférence un lé de 2,8 m de haut pour 1,5 m de large est apte à tenir sur le mur, sans aucune fixation mécanique ou chimique, par seule adhésion électrostatique, pendant au moins 30 minutes, ce qui laisse le temps de traiter les points singuliers (contours de baies, angles) avant la fixation définitive de la membrane au mur. L'adhésion électrostatique est relativement faible, ce qui permet de repositionner aisément la membrane en cas de besoin.

On peut fixer la membrane d'étanchéité à l'air en haut du mur par fixation directe audit mur, typiquement à l'aide d'un mastic. De même, la fixation en bas du mur, au niveau de la jonction avec le sol, est avantageusement réalisée à l'aide d'un mastic, généralement dans une deuxième étape, après la fixation dans la partie haute du mur.

Il est également possible de fixer la membrane d'étanchéité à l'air en haut du mur en reliant ladite membrane à une autre membrane étanche à l'air provenant des combles et débordant sur la partie haute dudit mur. Cette liaison peut se faire à l'aide d'un mastic, d'un adhésif, ou encore par soudage. Ce cas est spécifiquement adapté à la jonction entre le mur et un comble (murs d'une maison de plain-pied ou dernier étage d'une maison comprenant plusieurs niveaux), et permet de parfaire l'étanchéité à l'air de l'intégralité du bâtiment. La membrane provenant des combles est typiquement une membrane pare-vapeur ou frein-vapeur disposée du côté chaud de l'isolant. Il s'agit de préférence d'une membrane hygrorégulante, dont la perméabilité à la vapeur d'eau augmente avec le pourcentage d'humidité relative. Typiquement, la valeur Sd de telles membranes varie de moins de 0,2 m pour une humidité relative de 75% à plus de 5 m pour une humidité relative de 25%. De telles membranes, qui sont décrites dans la demande WO 96/33321 jouent également un rôle positif quant à l'étanchéité à l'air.

L'invention sera mieux comprise à la lumière de la description détaillée des figures qui suivent, lesquelles illustrent de manière non-limitative quelques modes de réalisation préférés.

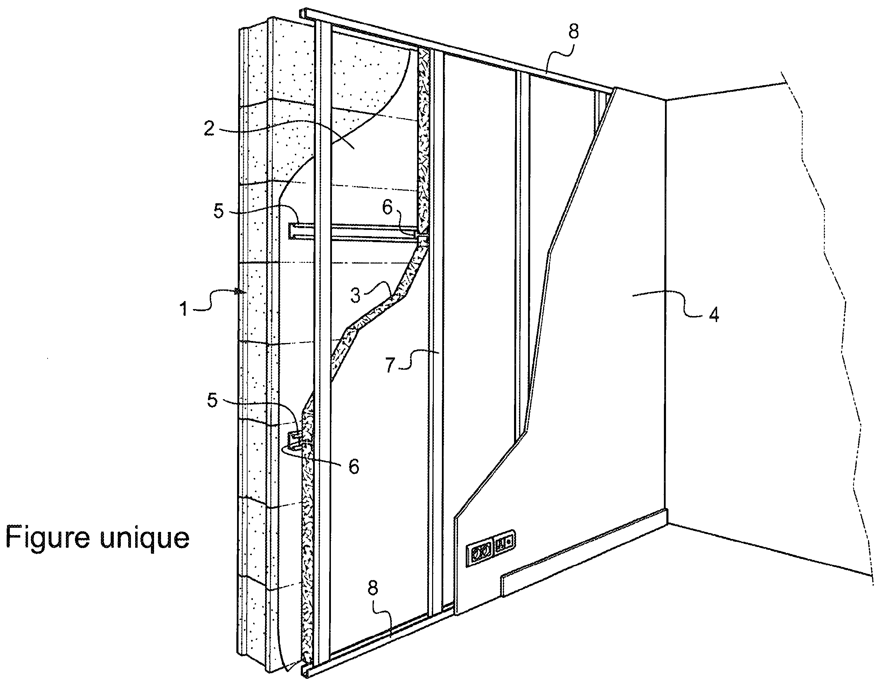

La Figure 1 est une vue partielle en perspective d'une paroi selon l'invention.

La paroi selon l'invention représentée en Figure 1 comprend un mur porteur 1 en blocs de béton de granulats. En contact direct avec ce mur, du côté intérieur du bâtiment est posée une membrane d'étanchéité à l'air 2. La paroi comprend également un isolant thermique 3 et un parement en plaques de plâtre 4.

La membrane 2 est composée d'un support en non-tissé de polypropylène associé par thermo-calandrage à un film en polyéthylène haute densité. La densité surfacique de la membrane est de l'ordre de 80 g/m².

La membrane 2, initialement sous forme de rouleaux, peut être déroulée à partir du haut du mur 1, et se maintient temporairement par adhésion électrostatique audit mur 1. La jonction de la membrane 2 au sol et au plafond peut être réalisée à l'aide d'un mastic. Les différents lés de la membrane 2 sont reliés de manière étanche entre eux à l'aide d'un adhésif tel que l'adhésif commercialisé sous la dénomination Vario KB1 par la demanderesse.

La membrane 2 est définitivement fixée au mur 1 à l'aide d'éléments de fixation et de maintien de l'isolant comprenant des fourrures horizontales 5 vissées ou chevillées au mur 1 et des éléments d'entretoisement 6 (aussi appelés appuis). Les fourrures 5 sont des profilés métalliques en U disposés horizontalement et sur lesquels viennent se clipser les éléments d'entretoisement 6. Les éléments d'entretoisement 6 sont réalisés en matière plastique afin de constituer des ruptures de pont thermique. Selon un autre mode de réalisation possible les éléments d'entretoisement 6 sont directement vissés ou chevillés au mur 1, sans utilisation de la fourrure 5, ce qui peut être avantageux en cas de murs très irréguliers, particulièrement en rénovation.

L'isolant thermique 3, sous forme de panneaux de laine de verre, est embroché sur les éléments d'entretoisement 6. Selon d'autres modes de réalisation, l'isolant peut être maintenu entre les éléments d'entretoisement 6 par simple compression.

Des profilés de support 7 du parement 4 sont fixés sur les éléments d'entretoisement par l'intermédiaire d'éléments de maintien non visibles sur la figure. Les profilés 7 sont également encastrés, en haut et en bas de la paroi, dans des rails métalliques 8. Le parement en plaques de plâtre 4 est ensuite fixé sur les profilés de support 7.

## Revendications

1. Paroi de bâtiment comprenant, depuis l'extérieur vers l'intérieur dudit bâtiment, un mur porteur maçonné (1), une membrane d'étanchéité à l'air (2) dont l'épaisseur d'air équivalente S_{d} au sens de la norme NF EN ISO 12572 :2001 sous conditions C est d'au plus 0,5 m, puis un isolant thermique (3) et un parement (4), ladite membrane (2) étant solidarisée audit mur porteur maçonné (1) à l'aide d'éléments de fixation et de maintien (5, 6) dudit isolant thermique (3).

2. Paroi selon la revendication précédente, **caractérisée par le fait que** l'épaisseur d'air équivalente S_{d} au sens de la norme NF EN ISO 12572 :2001 sous conditions C est comprise entre 0,02 m et 0,4 m, en particulier entre 0,1 m et 0,35 m, et de manière particulièrement préférée entre 0,18 m et 0,30 m.

3. Paroi selon la revendication précédente, telle que le mur porteur maçonné (1) comprend des éléments de maçonnerie solidarisés les uns aux autres par un mortier ou une colle, tels que parpaings, briques, moellons, blocs de béton de granulats.

4. Paroi selon l'une des revendications précédentes, telle que l'isolant thermique (3) est choisi parmi :
- les isolants à base végétale, tels que le liège comprimé, expansé, ou aggloméré ou les panneaux de particules ou de fibres de bois,
- les isolants minéraux, notamment à base de laine minérale, de verre cellulaire, d'argile expansée, de granulés expansés ou de paillettes exfoliées, notamment en mica ou vermiculite,
- les isolants en mousses plastiques alvéolaires, tels que polystyrènes expansés, moulés, thermo-comprimés ou extrudés, mousses rigides de PVC ou de polyuréthane.

5. Paroi selon l'une des revendications précédentes, telle que la membrane d'étanchéité à l'air (2) est en contact direct avec le mur porteur maçonné (1), et de préférence aussi en contact direct avec l'isolant thermique (3).

6. Paroi selon l'une des revendications précédentes, telle que la membrane d'étanchéité à l'air (2) présente au moins l'une, et de préférence chacune, des propriétés suivantes :
- la perméabilité à l'air sous une pression de 50 Pa selon la norme NF EN 12114 est inférieure à 0,1 m³/(h.m²),
- une résistance à la déchirure au clou dans le sens longitudinal et transverse d'au moins 40 N selon la norme NF EN 13859-2,
- une résistance à la traction dans le sens longitudinal et transverse d'au moins 100 N selon la norme NF EN 13859-2.

7. Paroi selon l'une des revendications précédentes, telle que la membrane d'étanchéité à l'air (2) est apte à adhérer au mur (1) par adhésion électrostatique.

8. Paroi selon l'une des revendications précédentes, telle que la membrane d'étanchéité à l'air (2) comprend un film en polyamide, de préférence en polyamide 6, ou en polyoléfine, de préférence en polyéthylène ou polypropylène.

9. Paroi selon l'une des revendications précédentes, telle que les éléments de fixation et de maintien de l'isolant thermique (5, 6) comprennent des éléments d'entretoisement (6) sur lesquels l'isolant thermique (3) est embroché ou entre lesquels l'isolant thermique (3) est comprimé.

10. Paroi selon la revendication précédente, telle que les éléments d'entretoisement (6) sont fixés au mur (1) soit directement, notamment par vissage ou clouage, soit par l'intermédiaire d'une fourrure (5) avec laquelle les éléments d'entretoisement (6) sont solidarisés.

11. Paroi selon l'une des revendications 9 ou 10, telle que des profilés de support (7) du parement (4) sont fixés sur les éléments d'entretoisement (6), notamment par l'intermédiaire d'éléments de maintien, les éléments d'entretoisement (6) et les éléments de maintien étant configurés de telle manière que la fixation des profilés puisse être effectuée à distance réglable du mur (1).

12. Paroi selon l'une des revendications précédentes, telle que le parement (4) est en un matériau choisi parmi le plâtre, les matériaux cellulosiques, les matières plastiques, le verre, le métal et la céramique.

13. Bâtiment comprenant au moins une paroi selon l'une des revendications précédentes et un toit.

14. Bâtiment selon la revendication précédente, tel que le toit est isolé au moyen d'un isolant recouvert sur sa face interne d'une membrane pare-vapeur étanche à l'air, reliée de manière étanche à la membrane d'étanchéité à l'air (2).

15. Procédé de doublage d'un mur porteur maçonné (1), comprenant les étapes suivantes :
- on pose sur la surface intérieure dudit mur (1) une membrane d'étanchéité à l'air (2) dont l'épaisseur d'air équivalente S_{d} au sens de la norme NF EN ISO 12572 :2001 sous conditions C est d'au plus 0,5 m, de préférence comprise entre 0,02 m et 0,4 m, plus préférentiellement entre 0,1 et 0,35 m, et en particulier entre 0,18 et 0,30 m, puis, dans un ordre indifférent,
- on fixe ladite membrane (2) en haut et en bas dudit mur (1), et l'on fixe sur ledit mur (1) des éléments de fixation et de maintien (5, 6) d'un isolant thermique (3) de manière à solidariser ladite membrane (2) avec ledit mur (1), puis
- on pose ledit isolant thermique (3) puis un parement (4).

16. Procédé selon la revendication précédente, dans lequel on fixe la membrane d'étanchéité à l'air (2), en haut dudit mur, soit par fixation directe audit mur (1), à l'aide d'un mastic, soit en reliant ladite membrane (2) à une autre membrane étanche à l'air provenant des combles et débordant sur la partie haute dudit mur (1), à l'aide d'un mastic, d'un adhésif, ou par soudage.

## Patentansprüche

1. Gebäudewandung aufweisend, vom Äußeren zum Inneren des Gebäudes, eine tragende Mauerwerkswand (1), eine luftundurchlässige Membran (2) deren äquivalente Luftschichtdicke S_{d} nach der Norm NF EN ISO 12572:2001 gemäß Bedingung C höchstens 0,5 m beträgt, dann ein Wärmedämmstoff (3) und eine Verkleidung (4), wobei die Membran (2) an der Mauerwerkswand (1) mittels Befestigungs- und Halteelementen (5, 6) des Wärmedämmstoffs (3) festgelegt ist.

2. Wandung nach dem vorhergehenden Anspruch, **dadurch gekennzeichnet dass** die äquivalente Luftschichtdicke S_{d} nach der Norm NF EN ISO 12572:2001 gemäß Bedingung C zwischen 0,02 m und 0,4 m, insbesondere zwischen 0,1 m und 0,35 m, besonders bevorzugt zwischen 0,18 m und 0,30 m ist.

3. Wandung nach dem vorhergehenden Anspruch, wobei die tragende Mauerwerkswand (1) Mauerwerkselemente aufweist, die miteinander mittels eines Mörtels oder eines Klebers verbunden sind, wie Bausteine, Mauerziegel, Naturkalksteine, Betonblocksteine.

4. Wandung nach einem der vorhergehenden Ansprüche, wobei der Wärmedämmstoff (3) ausgewählt ist aus:
- Dämmstoffen auf Basis von Pflanzenmaterial, wie verdichteter, expandierter oder agglomerierter Kork, oder Platten aus Holzpartikeln oder aus Holzfasern
- Mineralischen Dämmstoffen, insbesondere auf Basis von Mineralwolle, Schaumglas, expandiertem Ton, expandierten Granulaten, exfoliertem Glimmer, insbesondere Mica oder Vermiculit.
- Schaumdämmstoffe, wie expandiertes, geformtes, thermo-verdichtetes oder extrudiertes Polystyrol, PVC-Hartschaum oder Polyurethanhartschaum.

5. Wandung nach einem der vorhergehenden Ansprüche, wobei die luftdichte Membran (2) in direktem Kontakt mit der tragenden Mauerwerkswand (1) und vorzugsweise auch in direkten Kontakt mit dem Wärmedämmstoff (3) ist.

6. Wandung nach einem der vorhergehenden Ansprüche, wobei die luftundurchlässige Membran (2) mindestens eine, vorzugsweise alle der nachfolgenden Eigenschaften aufweist:
- die Luftdurchlässigkeit bei einem Druck von 50 Pa nach Norm NF EN 12114 ist kleiner als 0,1 m³/(h.m²),
- eine Nagel-Reißfestigkeit in Längs- und Querrichtung von wenigstens 40 N nach Norm NF EN 13859-2,
- eine Zugfestigkeit in Längs- und Querrichtung von wenigstens 100 N nach Norm NF EN 13859-2.

7. Wandung nach einem der vorhergehenden Ansprüche, wobei die luftundurchlässige Membran (2) geeignet ist, an der Wand (1) mittels elektrostatischer Adhäsion anzuhaften.

8. Wandung nach einem der vorhergehenden Ansprüche, wobei die luftundurchlässige Membran (2) einen Film aus Polyamid, vorzugsweise aus Polyamid 6, oder aus Polyolefin, vorzugsweise aus Polyethylen oder Polypropylen, aufweist.

9. Wandung nach einem der vorhergehenden Ansprüche, wobei die Befestigungs- und Halteelemente (5, 6) Versteifungselemente (6) aufweisen, auf denen der Wärmedämmstoff (3) aufgeschoben oder zwischen denen der Wärmedämmstoff (3) komprimiert ist.

10. Wandung nach dem vorhergehenden Anspruch, wobei die Versteifungselemente (6) an der Wand (1) unmittelbar, insbesondere durch Verschraubung oder Verklebung, oder über eine Schiene (5) befestigt sind, an der die Versteifungselemente (6) festgelegt sind.

11. Wandung nach Anspruch 9 oder 10, wobei Tragprofile (7) der Verkleidung (4) auf den Versteifungen (6) befestigt sind, insbesondere mittels Halteelementen, und die Versteifungselemente (6) und die Halteelemente so ausgelegt sind, dass die Befestigung der Profile in einem einstellbaren Abstand zur Wand (1) ausgeführt werden kann.

12. Wandung nach einem der vorhergehenden Ansprüche, wobei das Material der Verkleidung (4) ausgewählt ist aus Gips, Zellulosematerialien, Kunststoffen, Glas, Metall und Keramik.

13. Gebäude aufweisend wenigstens eine Wandung nach einem der vorhergehenden Ansprüche und ein Dach.

14. Gebäude nach dem vorhergehenden Anspruch, wobei das Dach mittels eines auf der Innenseite mit einer luftundurchlässigen Dampfbremse abgedeckten Dämmstoffes isoliert ist, die luftdicht mit der luftundurchlässigen Membran (2) verbunden ist.

15. Verfahren zur Verkleidung einer tragenden Mauerwerkswand (1), umfassend die nachfolgenden Schritte:
- man bringt eine luftundurchlässigen Membran (2) mit einer äquivalenten Luftschichtdicke S_{d} nach der Norm NF EN ISO 12572:2001 gemäß Bedingung C von höchstens 0,5 m, bevorzugt zwischen 0,02 m und 0,4 m, insbesondere zwischen 0,1 m und 0,35 m, besonders bevorzugt zwischen 0,18 m und 0,30 m an der inneren Oberfläche der Wand (1) an, dann, in beliebiger Reihenfolge,
- befestigt man die Membran (2) oben und unten an der Wand (1), und befestigt Befestigungs- und Halteelemente (5, 6) für einen Wärmedämmstoff (3) zum weiteren Festlegen der Membran (2) an der Wand (1), dann
- bringt man den Wärmedämmstoff (3) und anschließend eine Verkleidung (4) an.

16. Verfahren nach dem vorhergehenden Anspruch, wobei man die luftundurchlässige Membran (2) oben an der Wand (1) anbringt, entweder unmittelbar an der Wand (1) mittels eines Dichtklebers, oder indem man die Membran (2) an eine andere luftundurchlässige, aus dem Dachboden in den oberen Teil der Wand (1) überstehende Membran mittels eines Dichtklebers, eines Klebebands oder durch Schweißen anschließt.

## Claims

1. A partition for a building, comprising, from the exterior to the interior of said building, a bearing masonry wall (1), an air-barrier membrane (2) the equivalent air layer thickness S_{d} of which, as defined by NF EN ISO standard 12572:2001 under conditions C, is at most 0.5 m, then thermal insulation (3), and a facing (4), said membrane (2) being securely fastened to said bearing masonry wall (1) using elements (5, 6) for fastening and holding said thermal insulation (3) in place.

2. The partition as claimed in the preceding claim, **characterized in that** the equivalent air layer thickness S_{d}, as defined by NF EN ISO standard 12572:2001 under conditions C, lies between 0.02 m and 0.4 m, in particular between 0.1 m and 0.35 m, and in a particularly preferred way between 0.18 m and 0.30 m.

3. The partition as claimed in the preceding claim, such that the bearing masonry wall (1) comprises masonry elements that are securely fastened to one another using a mortar or an adhesive, such as concrete blocks, bricks, ashlars or aggregate blocks.

4. The partition as claimed in one of the preceding claims, such that the thermal insulation (3) is chosen from:
- vegetable based insulation, such as insulation based on compressed, expanded or agglomerated cork or wooden particleboard or fiberboard panels;
- insulating minerals, especially based on mineral wool, cellular glass, expanded clay, or on expanded granules or exfoliated flakes, especially of mica or vermiculite; and
- insulation made of cellular plastic foams, such as expanded, thermally compressed, molded or extruded polystyrene, or rigid PVC or polyurethane foams.

5. The partition as claimed in one of the preceding claims, such that the air-barrier membrane (2) makes direct contact with the bearing masonry wall (1), and preferably also makes direct contact with the thermal insulation (3).

6. The partition as claimed in one of the preceding claims, such that the air-barrier membrane (2) has at least one, and preferably each, of the following properties:
- its air permeability under a pressure of 50 Pa, according to NF EN standard 12114, is lower than 0.1 m³/ (h.m²);
- its nail tear strength in the longitudinal and transverse direction is at least 40 N according to NF EN standard 13859-2; and
- its tensile strength in the longitudinal and transverse direction is at least 100 N according to NF EN standard 13859-2.

7. The partition as claimed in one of the preceding claims, such that the air-barrier membrane (2) is able to adhere to the wall (1) by electrostatic adhesion.

8. The partition as claimed in one of the preceding claims, such that the air-barrier membrane (2) comprises a film made of a polyamide, preferably polyamide-6, or of a polyolefin, preferably polyethylene or polypropylene.

9. The partition as claimed in one of the preceding claims, such that the elements for fastening and holding the thermal insulation (5, 6) in place comprise spacer elements (6) to which the thermal insulation (3) is secured or between which the thermal insulation (3) is compressed.

10. The partition as claimed in the preceding claim, such that the spacer elements (6) are fastened to the wall (1) either directly, especially by screw fastening or nailing, or by way of a furring (5) to which the spacer elements (6) are securely fastened.

11. The partition as claimed in either one of claims 9 and 10, such that strips (7) supporting the facing (4) are fastened to the spacer elements (6), especially by way of holding elements, the spacer element (6) and the holding elements being configured such that the strips can be fastened at an adjustable distance from the wall (1).

12. The partition as claimed in one of the preceding claims, such that the facing (4) is made of a material chosen from plaster, cellulose materials, plastics, glass, metal and ceramics.

13. A building comprising at least one partition according to one of the preceding claims, and a roof.

14. The building as claimed in the preceding claim, such that the roof is insulated by means of insulation covered, on its internal face, with an airtight vapor-barrier membrane that is joined in a sealed manner to the air-barrier membrane (2).

15. A method for lining a bearing masonry wall (1), comprising the following steps:
- an air-barrier membrane (2) is applied to the interior surface of said wall (1), the equivalent air layer thickness S_{d} of which membrane (2), as defined by NF EN ISO standard 12572:2001 under conditions C, is at most 0.5 m, and is preferably between 0.02 m and 0.4 m, is more preferably between 0.1 and 0.35 m and in particular is between 0.18 and 0.30 m, then, in any order,
- said membrane (2) is fastened at the top and bottom of said wall (1), and elements (5, 6) for fastening and holding thermal insulation (3) in place are fixed to said wall (1) so as to securely fasten said membrane (2) to said wall (1), and then
- said thermal insulation (3), and then a facing (4) are applied.

16. The method as claimed in the preceding claim, in which the air-barrier membrane (2) is either directly fastened to the top of the wall (1) using mastic, or is fastened at the top of said wall (1) by joining said membrane (2) to another airtight membrane emerging from the roof space and projecting over the top part of said wall (1), using mastic, an adhesive or by heat sealing.
